# FASCICULE DE BREVET EUROPEEN

(11) **EP 0 491 631 B1**
(45) Date de publication et mention de la délivrance du brevet: **05.04.1995**
(21) Numéro de dépôt: 91420442.5
(22) Date de dépôt: 11.12.1991
(51) Int. Cl.: B65G 21/20, B65G 15/14

(54) **Convoyeur équipé d'un dispositif de guidage latéral à entrainement synchronisé**
Fördereinrichtung, mit Seitenführungseinrichtung mit Synchronantrieb
Conveying apparatus, having lateral guide means with synchronous driving means

(30) Priorité: 17.12.1990 FR 9015892
(43) Date de publication de la demande: 24.06.1992
(73) Titulaire: SCHNEIDER ELECTRIC SA, 92100 Boulogne Billancourt (FR)
(72) Inventeur: Izoard, Jean, F-38050 Grenoble Cedex (FR)
(74) Mandataire: Hecké, Gérard

(56) Documents cités:
- BE-A- 816 112
- FR-A- 1 033 503
- US-A- 3 850 284

## Description

L'invention est relative à un convoyeur comprenant un tapis transporteur mobile à écailles articulées, destiné à transporter automatiquement des appareils ou sous-ensembles entre différents postes de travail d'une ligne de production, ledit tapis transporteur étant conformé en chaîne fermée comportant un premier tronçon supérieur de support des appareils, un deuxième tronçon inférieur de retour, et un dispositif de guidage latéral des appareils transportés sur le premier tronçon.

Le dispositif de guidage latéral des appareils ou sous-ensembles transportés sur les convoyeurs classiques comporte généralement des rails fixes de guidage s'étendant le long du tapis transporteur sur une distance prédéterminée. L'association des rails de guidage immobiles avec un tapis transporteur mobile peut engendrer des problèmes de liaison, notamment en présence de sous-ensembles à positionnement instable sur le tapis. Le déplacement en translation des sous-ensembles sur le tapis est alors perturbé par des problèmes de liaison.

L'objet de l'invention consiste à améliorer le guidage et la stabilité des appareils ou sous-ensembles transportés sur un convoyeur à écailles articulées.

Le convoyeur selon l'invention est caractérisé en ce que le dispositif de guidage latéral est équipé d'une paire de courroies de guidage s'étendant de part et d'autre du tronçon supérieur, en étant déplacées par un mécanisme d'entraînement en synchronisme avec la vitesse de défilement de la chaîne du convoyeur, et que ledit mécanisme comporte deux entraîneurs symétriques à engrenages et pignons constituant deux liaisons mécaniques desmodromiques faisant correspondre la vitesse tangentielle et le sens de déplacement des branches internes des courroies, à celle du tronçon supérieur du tapis transporteur.

L'entraînement des courroies de guidage par le mécanisme s'effectue le long d'une section droite du convoyeur, et est dérivé du mouvement de déplacement en translation du tronçon inférieur.

La synchronisation de la vitesse des deux entraîneurs avec celle du convoyeur contribue à un mouvement uniforme des sous-ensembles sur le tapis transporteur et améliore leur stabilité.

Selon un mode de réalisation, chaque entraîneur comporte une roue dentée principale en prise latéralement avec un interstice agencé entre deux écailles articulées successives du tronçon inférieur, ladite roue étant montée à rotation sur un premier axe principal sur lequel se trouve un pignon intermédiaire de commande, destiné à transmettre le mouvement de rotation de la roue dentée principale à un pignon de transmission calé mécaniquement sur un deuxième axe secondaire s'étendant parallèlement au premier axe principal.

Chaque courroie de guidage peut être du type cranté, et est enroulée autour d'une roue dentée d'entraînement montée sur le deuxième axe au-dessus du niveau du tronçon supérieur, et d'une roue dentée de renvoi associée à un tendeur automatique exerçant une pression prédéterminée sur les appareils déplacés sur le convoyeur.

D'autres avantages et caractéristiques ressortiront plus clairement de la description suivante d'un mode de réalisation, donné à titre d'exemple non limitatif, et représenté aux dessins annexés, dans lesquels:

La figure 1 est une vue en élévation d'une partie du convoyeur équipé du dispositif de guidage latéral à entraînement synchronisé.

La figure 2 est une vue en plan de la figure 1.

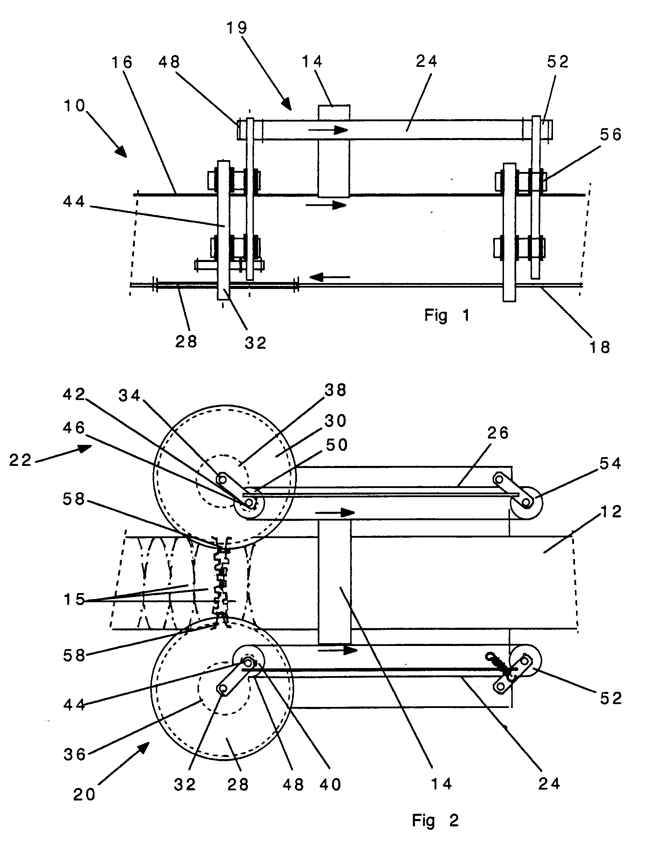

En référence aux figures 1 et 2, est représenté un convoyeur 10 à tapis transporteur 12 destiné à transporter des appareils 14 ou pièces de sous-ensembles entre différents postes de travail d'une ligne de production. Le tapis transporteur 12 à écailles articulées 15 du convoyeur 10 est conformé en chaîne fermée comportant un tronçon supérieur 16 sur lequel sont positionnés les appareils 14, et un tronçon inférieur 18 de retour. La vitesse de défilement des deux tronçons 16,18 est identique, mais le mouvement de déplacement s'effectue en sens opposé.

Au tronçon inférieur 18 est associé un mécanisme d'entraînement 19 destiné à déplacer en synchronisme une paire de courroies 24,26 de guidage agencées latéralement de part et d'autre du tronçon supérieur 16.

Le mécanisme d'entraînement 19 comporte deux entraîneurs 20,22 identiques à engrenages, ayant chacun une roue dentée 28,30 principale en prise avec les bords des écailles articulées 15 du tronçon inférieur 18. La roue principale 28,30 est montée à rotation sur un premier axe 32,34 vertical, sur lequel se trouve un pignon intermédiaire 36,38 de commande.

Chaque pignon intermédiaire 36,38 coopère avec un pignon de transmission 40,42 calé mécaniquement sur un deuxième axe 44,46 secondaire, sur lequel est montée une roue dentée 48,50 d'entraînement de la courroie 24,26 crantée correspondante. A l'opposé de la roue dentée 48,50, la courroie 24,26 coopère avec une roue dentée 52,54 de renvoi associée à un dispositif tendeur 56 automatique exerçant une pression prédéterminée sur les appareils 14 déplacés sur le convoyeur 10.

La transmission assurée par les deux entraîneurs 20,22 permet d'entraîner simultanément les deux courroies 24,26 en synchronisme avec la vitesse de défilement de la chaîne du convoyeur 10. Le premier axe 32,34 de chaque entraîneur 20,22 s'étend parallèlement au deuxième axe 44,46 secondaire selon une direction perpendiculaire au tapis transporteur 12. L'intervalle transversal entre les branches internes des deux courroies 24,26 est supérieur à la largeur du tapis transporteur 12, et correspond sensiblement à la largeur des appareils 14.

Le fonctionnement du mécanisme d'entraînement 19 latéral des courroies 24,26 de guidage est le suivant:

Les deux entraîneurs 20,22 des courroies 24,26 du mécanisme 19 sont agencés symétriquement le long d'une section droite du convoyeur 10, autorisant la prise des deux roues dentées 28,30 principales avec des interstices 58 ménagés sur les chants opposés du tronçon inférieur 18 entre les écailles 15 successives. La forme curviligne des écailles 15 articulées permet des changements de direction du tapis transporteur 12 dans un plan vertical ou horizontal.

L'entraînement des deux courroies 24,26 de guidage est dérivé du mouvement de déplacement en translation du tronçon inférieur 18, et s'effectue en synchronisme avec la vitesse du convoyeur 10. Le sens de déplacement des différents organes des entraîneurs 20,22 est indiqué sur les figures 1 à 2 par des flèches. La transmission du mouvement de rotation des roues dentées 28,30 principales aux roues dentées 48,50 d'entraînement des courroies 24,26 crantées, s'opère au moyen des deux chaînes cinématiques à pignons 36,38; 40,42 et axes 32,34; 40,42 constituant une paire de liaisons mécaniques desmodromiques faisant correspondre la vitesse tangentielle et le sens de déplacement des courroies 24,26 à celle du tronçon supérieur 16 du tapis transporteur 12.

Le mouvement de rotation des roues dentées 28,48,52 et pignons 36,40 de l'entraîneur 20 est opposé à celui respectivement des roues dentées 30,50,54 et pignons 38,42 de l'autre entraîneur 22. Le sens de déplacement des branches internes des courroies 24,26 de guidage est identique, et la vitesse constante de chacune correspond avec précision à la vitesse de défilement des appareils 14 positionnées sur le tronçon supérieur 16 du tapis transporteur 12.

La synchronisation de la vitesse des deux entraîneurs 20,22 avec celle du convoyeur 10 améliore le guidage latéral et assure un maintien stable des appareils 14 sur le tapis 12 pendant une course prédéterminée correspondant à la longueur des courroies 24,26.

La course longitudinale de guidage des appareils 14 dépend de la spécificité du poste de travail, et permet d'opérer des opérations en continu (montage, contrôle, etc...) directement sur le convoyeur en mouvement. La longueur des courroies 24,26 de guidage est adaptée à chaque opération et à chaque type de produits ou articles 14 transportés.

## Revendications

1. Convoyeur comprenant un tapis transporteur (12) mobile à écailles (15) articulées, destiné à transporter automatiquement des appareils (14) ou sous-ensembles entre différents postes de travail d'une ligne de production, ledit tapis transporteur (12) étant conformé en chaîne fermée comportant un premier tronçon (16) supérieur de support des appareils (14), un deuxième tronçon (18) inférieur de retour, et un dispositif de guidage latéral des appareils (14) transportés sur le premier tronçon (16),
caractérisé en ce que,
le dispositif de guidage latéral est équipé d'une paire de courroies (24,26) de guidage s'étendant de part et d'autre du tronçon supérieur (16), en étant déplacées par un mécanisme d'entraînement (19) en synchronisme avec la vitesse de défilement de la chaîne du convoyeur (10), que ledit mécanisme (19) comporte deux entraîneurs (20,22) symétriques à engrenages et pignons constituant deux liaisons mécaniques desmodromiques faisant correspondre la vitesse tangentielle et le sens de déplacement des branches internes des courroies (24,26), à celle du tronçon supérieur (16) du tapis transporteur (12), et que l'entraînement des courroies (24,26) de guidage par le mécanisme (19) s'effectue le long d'une section droite du convoyeur (10), et est dérivé du mouvement de déplacement en translation du tronçon inférieur (18).

2. Convoyeur selon la revendication 1, caractérisé en ce que chaque entraîneur (20,22) comporte une roue dentée principale (28,30) en prise latéralement avec un interstice (58) agencé entre deux écailles (15) articulées successives du tronçon inférieur (18), ladite roue étant montée à rotation sur un premier axe (32,34) principal sur lequel se trouve un pignon intermédiaire (36,38) de commande, destiné à transmettre le mouvement de rotation de la roue dentée principale (28,30) à un pignon de transmission (40,42) calé mécaniquement sur un deuxième axe (44,46) secondaire s'étendant parallèlement au premier axe (32,34) principal.

3. Convoyeur selon la revendication 2, caractérisé en ce que chaque courroie (24,26) de guidage est du type cranté, et est enroulée autour d'une roue dentée d'entraînement (48,50) montée sur le deuxième axe (44,46) au-dessus du niveau du tronçon supérieur (16), et d'une roue dentée de renvoi (52,54) associée à un dispositif tendeur (56) automatique exerçant une pression prédéterminée sur les appareils 14 déplacés sur le convoyeur 10.

## Claims

1. A conveyor line comprising a mobile conveyor belt (12) with articulated scales (15), designed to automatically transport apparatuses (14) or sub-assemblies between different work stations of a production line, said conveyor belt (12) being in the form of a closed chain comprising a first upper section (16) for support of the apparatuses (14), a second lower return section (18), and a lateral guiding device of the apparatuses (14) transported on the first section (16),
characterized in that,
the lateral guiding device is equipped with a pair of guide belts (24, 26) extending on each side of the upper section (16), being moved by a drive mechanism (19) in synchronism with the running speed of the conveyor line (10), that said mechanism (19) comprises two symmetrical drivers (20, 22) with cogs and pinions constituting two desmodromic mechanical links making the tangential speed and the direction of movement of the internal branches of the belts (24, 26) correspond to that of the upper section (16) of the conveyor belt (12), and that driving of the guide belts (24, 26) by the mechanism (19) is performed along a straight section of the conveyor line (10), and is derived from the translation movement of the lower section (18).

2. The conveyor line according to claim 1, characterized in that each driver (20, 22) comprises a main cog-wheel (28, 30) in engagement laterally with a gap (58) arranged between two successive articulated scales (15) of the lower section (18), said cog-wheel being mounted in rotation on a first main spindle (32, 34) on which an intermediate operating pinion (36, 38) is located, designed to transmit the rotational movement of the main cog-wheel (28, 30) to a transmission pinion (40, 42) mechanically keyed onto a second secondary spindle (44, 46) extending parallel to the first main spindle (32, 34).

3. The conveyor line according to claim 2, characterized in each guide belt (24, 26) is of the notched type, and is wound around a drive cog-wheel (48, 50) mounted on the second spindle (44, 46) above the level of the upper section (16), and around a return cog-wheel (52, 54) associated with an automatic stretcher device (56) exerting a predetermined pressure on the apparatuses (14) transported on the conveyor line (10).

## Patentansprüche

1. Stetigförderer mit einem beweglichen Transportband (12) mit gelenkig verbundenen Gliederplatten (15), der zum automatischen Transport von Geräten (14) oder Baugruppen zwischen verschiedenen Arbeitsstationen einer Fertigungslinie dient, wobei das genannte Transportband (12) als geschlossene Kette mit einem oberen Strang (16) zur Aufnahme der Geräte (14), einem unteren Rücklaufstrang (18) und einem Seitenführungssystem für die auf dem ersten Strang (16) transportierten Geräte (14) ausgeführt ist,
dadurch gekennzeichnet, daß
das Seitenführungssystem zwei Führungsriemen (24, 26) umfaßt, die zu beiden Seiten des oberen Strangs (16) angeordnet sind und durch ein Antriebssystem (19) entsprechend der Laufgeschwindigkeit des Stetigförderers (10) synchron mitgeführt werden, daß das genannte Antriebssystem (19) zwei symmetrisch angeordnete und je eine desmodromische mechanische Verbindung bildende Mitnehmergetriebe (19) mit Zahnrädern und Ritzeln umfaßt, die die Tangentialgeschwindigkeit und die Bewegungsrichtung der innenliegenden Stränge der Führungsriemen (24, 26) mit dem oberen Strang (16) des Transportbands (12) synchronisieren, und daß der Antrieb der Führungsriemen (24, 26) durch den Mechanismus (19) entlang eines geradlinigen Abschnitts des Stetigförderers (10) erfolgt sowie aus der Linearbewegung des unteren Transportbandstrangs (18) abgeleitet ist.

2. Stetigförderer nach Anspruch 1, dadurch gekennzeichnet, daß jedes Mitnehmergetriebe (20, 22) ein Hauptzahnrad (28, 30) umfaßt, das mit einer zwischen zwei aufeinanderfolgenden Gliederplatten (15) des unteren Transportbandstrangs (18) ausgebildeten Lücke (58) seitlich in Eingriff steht und drehbar auf einer ersten Hauptachse (32, 34) gelagert ist, auf der ein Zwischenritzel (36, 38) montiert ist, welches dazu dient, die Drehbewegung des Hauptzahnrads (28, 30) auf ein Antriebsritzel (40, 42) zu übertragen, das mechanisch auf einer, parallel zur ersten Hauptachse (32, 34) angeordneten zweiten Nebenachse (44, 46) starr befestigt ist.

3. Stetigförderer nach Anspruch 2, dadurch gekennzeichnet, daß jeder Führungsriemen (24, 26) als Zahnriemen ausgeführt und um ein oberhalb des oberen Strangs (16) auf der zweiten Achse (44, 46) montiertes Antriebszahnrad (48, 50) sowie um ein Umlenkzahnrad (52, 54) gelegt ist, das einer automatischen Spannvorrichtung (56) zugeordnet ist, die einen bestimmten Druck auf die mit dem Stetigförderer (10) transportierten Geräte (14) ausübt.
